# EUROPEAN PATENT SPECIFICATION

(11) **EP 2 396 100 B1**
(45) Date of publication and mention of the grant of the patent: **01.05.2013**
(21) Application number: 10706919.7
(22) Date of filing: 10.02.2010
(51) Int. Cl.: B01D 46/24, B01D 29/00, B01D 46/00, B01D 53/04, B01D 3/32

(54) **TREATMENT TANK WITH CANDLE FILTER TRAY**
VERARBEITUNGSTANK MIT FILTERKERZENABLAGE
CUVE DE TRAITEMENT AYANT UN PLATEAU FILTRANT À BOUGIES

(30) Priority: 12.02.2009 DE 102009008697
(43) Date of publication of application: 21.12.2011
(73) Proprietor: Outotec OYJ, 02200 Espoo (FI)
(72) Inventor: CACHERO VENTOSA, David, 60594 Frankfurt am Main (DE); SCHALK, Wolfram, 61352 Bad Homburg (DE)
(74) Representative: KEIL & SCHAAFHAUSEN Patentanwälte
(86) International application number: PCT/EP2010/000829
(87) International publication number: WO 2010/091850

(56) References cited:
- WO-A1-01/47804
- DE-A1- 1 804 591
- GB-A- 990 774
- US-A- 2 565 355
- US-A- 2 577 581
- US-A- 2 726 123
- US-A- 3 338 566
- US-A- 4 161 389
- US-A1- 2004 080 059
- US-A1- 2008 271 607
- US-B1- 6 350 290

## Description

This invention relates to a treatment tank with a horizontal candle filter tray for cleaning liquids and/or gases, in particular in a sulfuric acid tower.

In the production of sulfuric acid, the sulfuric acid is guided in counterflow to a gas stream containing sulfur trioxide through a spray tower (absorber) in which part of the sulfur trioxide is absorbed by the sulfuric acid and thereby increases its concentration. Due to the intensive contact with the acid, the gas velocity and the spray density, the gas absorbs a small amount of acid in the form of fine droplets or mist. For protecting the equipment following the absorber against corrosion and condensate and, in the case of the final absorber, to avoid sulfuric acid emissions, these droplets must be separated as far as possible. For this purpose, filters are installed in the gas outlet of the absorber. Very good separation efficiencies are offered by so-called candle filters, which consist for example of a two-layer, hollow-cylindrical wire mesh with interposed glass wool or the like. The candles are inserted in a candle tray of the filter housing installed on the tower, wherein the candles can be arranged both hanging and also upright. The acid separated flows off along the inner or outer candle wall. It gets back into the tower or can be discharged separately.

In known constructions of candle filter trays, which are fixed at the tower wall along their periphery, high vertical deformations frequently occur in the center of the tray. This is disadvantageous, because the filter candles then are no longer upright. It has been attempted to eliminate this disadvantage by stiffening elements of the tray. However, this requires a considerable expenditure of material. With a tower diameter of about 7 to 10 meters, very strong stiffening elements would be required, for example by a system of main and secondary beams.

From DE-PS 974 661, for example, a nozzle filter tray for potable and industrial water filtration is known, which consists of perforated and reinforced concrete plates arranged in parallel one beside the other. For stiffening purposes, closely spaced beams of prestressed concrete of single or multiple T cross-section are used, which extend over the entire filter basin and only are supported on the opposite walls thereof and in whose horizontal part uniformly distributed filter nozzles are inserted on both sides of the perpendicular web or webs.

From DE-PS 1 153 346 a filter tray with a closed or open construction is known for cleaning liquids, in particular for rapid and pressure filters, in which to avoid deflections the filter tray consists of at least two horizontal base plates lying one above the other at a distance and provided with through holes, which are frictionally and rigidly connected with each other by filter elements extending between the same.

From DE 23 05 564 C2, a column for contacting liquids and steam with column trays is known, which along their periphery are held by one peripheral bracket each, which in turn is attached to the column wall, wherein each tray includes steam through holes and elongated pans which partly extend above and partly below the active tray surface, are open towards the top and include liquid discharge openings at the pan base. To create a column with trays constructed lighter in weight, it is provided that each tray includes one or more support brackets which extend along a tray diameter and/or along tray chords, and that the pans extend from the peripheral bracket to a support bracket and, in the case of a plurality of support brackets, between the support brackets.

From DE 197 49 617 A1, a supporting structure for buildings is known, which should provide possibilities for variations and modifications of the division of ceilings and walls during the construction and/or at a later date, in order to be able to realize expansions or reconfigurations in the case of an increased or changed demand of living space or usable space, for which purpose vertical supports are provided, which are connected with each other by means of at least one frame and for which purpose the supporting structure, the roof of the building as well as ceilings and walls are at least partly of the load-bearing type, and for which purpose the supporting structure is configured to absorb tensile forces caused by roof and/or walls and/or ceilings.

In US 2,565,355 A a bubble tray and support structure framework for supporting bubble trays is disclosed. The framework structure is made up of truss members formed of upper and lower chord elements joined by struts and angled cross frame members. The trays are secured to the trust members at individual tray element sections spot welded to the supporting elements, while the outermost portions of each plate are supported on an annular ring member secured to the inner surface of the tower

It is the object of the present invention to propose a treatment tank as mentioned above, in which a deflection of the candle filter tray is effectively avoided with little effort.

This object is solved with the invention by the features of claim 1..

By means of the adjustable prestress of the tension bars, the movement of the central region of the candle filter tray fixed at the outer periphery of the tank wall virtually can be brought to zero, independent of the load. At the same time, relatively little material is required for the candle filter tray construction, so that a proper positioning of the filter candles can be ensured with lower costs.

Preferably, the tension bars are guided up to the tank wall and are fixed thereto.

It is also possible that the tension bars are guided upward-outside at an angle from the central beam in the direction of the tank wall over more than half of the tank radius up to the candle filter tray and are attached to the same.

In a particular configuration, the tension bars can extend upward-outside from the central beam over more than 2/3 of the tank radius in the direction of the tank wall up to the candle filter tray and can be fixed thereto.

For simplicity, the central beam can for example be a commercially available tube.

In accordance with the invention, a plurality of receiving openings are provided in the candle filter tray, in order to receive the candle filters.

In accordance with a development of the invention, the receiving openings are formed by tube sections, wherein ribs preferably are provided between the tube sections, in order to increase the rigidity of the candle filter tray.

Further developments, advantages and possible applications of the invention can be taken from the following description of embodiments and the drawing. All features described and/or illustrated form the subject-matter of the invention per se or in any combination, also independent of their inclusion in the claims or their back-reference.

In the drawing:
- Fig. 1: schematically shows an oblique view of a circular sector of a candle filter tray construction including the invention,
- Fig. 2: shows a top view of a candle filter tray in accordance with the invention, and
- Fig. 3: shows a partial section through the candle filter tray of Fig. 2.

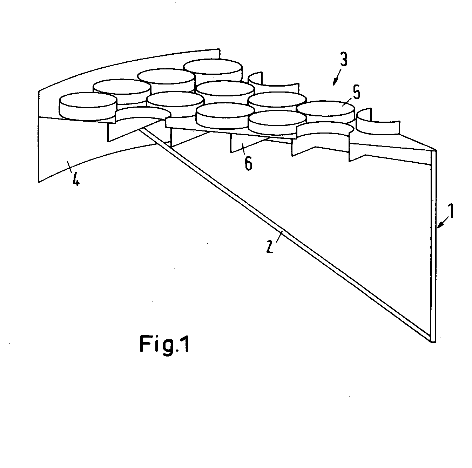

In the candle filter tray construction shown in Fig. 1, the filter tray 3 is centrally attached to a vertical central beam 1 formed e.g. as tube. One or more prestressed tension bars 2 extend upward-outside at an angle from a point of the central beam 1 located below the candle filter tray 3 in the direction of the tank wall 4 and are attached, e.g. welded or screwed thereto.

Since the candle filter tray itself is fixed to the tank wall 4 along its outer periphery, the tension bars 2 need not be mounted directly to the tank wall 4, but can also extend from the central beam 1 over only more than half or up to more than 2/3 of the tank radius upward-outside in the direction of the tank wall 4 up to the candle filter tray 3 and be attached thereto. In the illustrated case, the only tension bar 2 visible is guided up to the tank wall 4 and fixed thereto. The number of tension bars 2 used altogether can be adapted to the respective load conditions. Preferably, 3 or 6 tension bars 2 uniformly distributed over the periphery of the central beam 1 are provided.

The candle filters not shown here are hung into receiving openings 5, wherein they can either hang downwards through the candle filter tray 3 or protrude upwards from the same. Below the candle filter tray 3, reinforcing ribs 6 are provided, in order to increase the stiffness of the tray 3.

The tension bars 2 previously are mounted on the candle filter tray 3, wherein the candle filter tray 3 is turned upside down for this purpose and the tension bars 2 are mounted. Due to a corresponding prestress of the tension bars 2 it is ensured that no vertical displacement occurs in the center of the tray during insertion of the candle filter tray 3 into the sulfuric acid tower.

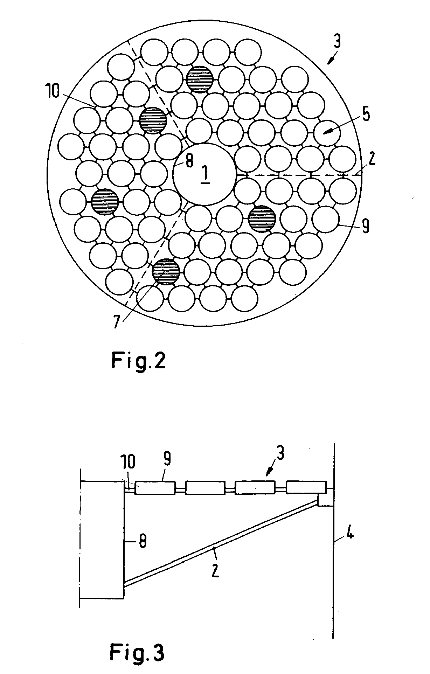

As can be taken from Fig. 2, a multitude of receiving openings 5 can be provided by maximally utilizing the surface area of the candle filter tray 3. If a corresponding number of candle filters is not required in a specific case of application, individual receiving openings 5 can be closed by blind covers 7 or the like. The tension bars 2 indicated in broken lines are attached to a central tube 8, which serves as central beam 1.

In the embodiment shown in Fig. 3, the receiving openings 5 are formed as tube sections 9 which are pushed through the candle filter tray 3 and for example welded to the same. The additional reinforcing ribs 6 at the bottom surface of the candle filter tray 3 can be omitted in this case. It has turned out that when using the tension bars 2 to prevent the deflection, it is sufficient to connect the tube sections 9 by correspondingly short ribs 10. In this way, the weight of the candle filter tray 3 and hence the costs can be reduced considerably.

### List of Reference Numerals:

| | |
|---|---|
| 1 | central beam |
| 2 | tension bars |
| 3 | candle filter tray |
| 4 | tank wall |
| 5 | receiving openings |
| 6 | reinforcing ribs |
| 7 | blind cover |
| 8 | tube |
| 9 | tube sections |
| 10 | ribs |

## Claims

1. A treatment tank in particular for cleaning liquids and/or gases, **characterized by** a horizontal tray (3) fixed to the tank wall (4), a vertical central beam (1) to which the tray (3) is centrally fixed, and one or more prestressed tension bars (2) which extend upward-outside at angle from the central beam (1) in the direction of the tank wall (4) and are fixed to the tank wall (4) or to the tray (3).

2. The treatment tank according to claim 1, **characterized in that** the tension bars (2) extend up to the tank wall (4).

3. The treatment tank according to claim 1, **characterized in that** the tension bars (2) extend upward-outside from the central beam (1) over more than half of the tank radius in the direction of the tank wall (4) up to the tray (3).

4. The treatment tank according to claim 3, **characterized in that** the tension bars (2) extend upward-outside from the central beam (1) over more than about 2/3 of the tank radius in the direction of the tank wall (4) up to the tray (3).

5. The treatment tank according to any one of the preceding claims, **characterized in that** the central beam (1) is a tube (8).

6. The treatment tank according to any one of the preceding claims, **characterized in that** in the tray (3) a multitude of receiving openings (5) are provided.

7. The treatment tank according to claim 6, **characterized in that** the receiving openings (5) are formed by tube sections (9).

8. The treatment tank according to claim 7, **characterized in that** between the tube sections (9) ribs (10) are provided.

9. The treatment tank according to any one of the preceding claims, **characterized in that** the tray (3) carries a multitude of candle filters.

## Patentansprüche

1. Behandlungsbehälter insbesondere für das Reinigen von Flüssigkeiten und/oder Gasen, **gekennzeichnet durch** einen an der Behälterwandung (4) befestigten horizontalen Boden (3), einen vertikalen Zentralträger (1), an welchem der Boden (3) mittig festgelegt ist, sowie einen oder mehrere vorgespannte Zugstäbe (2), welche von dem Zentralträger (1) schräg nach außen oben in Richtung der Behälterwandung (4) verlaufen und an der Behälterwandung (4) oder an dem Boden (3) festgelegt sind.

2. Behandlungsbehälter nach Anspruch 1, **dadurch gekennzeichnet, dass** die Zugstäbe (2) bis zu der Behälterwandung (4) führen.

3. Behandlungsbehälter nach Anspruch 1, **dadurch gekennzeichnet, dass** die Zugstäbe (2) von dem Zentralträger (1) aus bis über mehr als die Hälfte des Behälterradius nach außen oben in Richtung der Behälterwandung (4) bis zu dem Boden (3) führen.

4. Behandlungsbehälter nach Anspruch 3, **dadurch gekennzeichnet, dass** die Zugstäbe (2) von dem Zentralträger (1) bis über mehr als etwa 2/3 des Behälterradius nach außen oben in Richtung der Behälterwandung (4) bis zu dem Boden (3) führen.

5. Behandlungsbehälter nach einem vorhergehenden Ansprüche, **dadurch gekennzeichnet, dass** der Zentralträger (1) ein Rohr (8) ist.

6. Behandlungsbehälter nach einem der vorhergehenden Ansprüche, **dadurch gekennzeichnet, dass** in dem Boden (3) eine Vielzahl von Aufnahmeöffnungen (5) vorgesehen ist.

7. Behandlungsbehälter nach Anspruch 7, **dadurch gekennzeichnet, dass** die Aufnahmeöffnungen (5) durch Rohrabschnitte (9) gebildet werden.

8. Behandlungsbehälter nach Anspruch 8, **dadurch gekennzeichnet, dass** zwischen den Rohrabschnitten (9) Rippen (10) vorgesehen sind.

9. Behandlungsbehälter nach einem der vorhergehenden Ansprüche, **dadurch gekennzeichnet, dass** der Boden (3) eine Mehrzahl von Kerzenfiltern trägt.

## Revendications

1. Réservoir de traitement pour nettoyer des liquides et/ou gaz, **caractérisés par** un chariot horizontal (3) fixé à la paroi du réservoir (4), un montant central vertical (1) auquel le chariot (3) est fixé au centre, et une ou plusieurs barres de tension précontraintes (2) qui se prolongent vers le haut à l'extérieur d'un angle du montant central (1) dans le sens de la paroi du réservoir (4) et sont fixées à la paroi du réservoir (4) ou au chariot (3).

2. Réservoir de traitement selon la revendication 1, **caractérisé en ce que** les barres de tension (2) se prolongent jusqu'à la paroi du réservoir (4).

3. Réservoir de traitement selon la revendication 1, **caractérisé en ce que** les barres de tension (2) se prolongent vers le haut à l'extérieur du montant central (1) sur plus d'une moitié du rayon du réservoir dans le sens de la paroi du réservoir (4) jusqu'au chariot (3).

4. Réservoir de traitement selon la revendication 3, **caractérisé en ce que** les barres de tension (2) se prolongent vers le haut à l'extérieur du montant central (1) sur plus d'environ 2/3 du rayon du réservoir dans le sens de la paroi du réservoir (4) jusqu'au chariot (3).

5. Réservoir de traitement selon l'une quelconque des revendications précédentes, **caractérisé en ce que** le montant central (1) est un tube (8).

6. Réservoir de traitement selon l'une quelconque des revendications précédentes, **caractérisé en ce que** dans le chariot (3), une multitude d'ouvertures réceptrices (5) sont fournies.

7. Réservoir de traitement selon la revendication 6, **caractérisé en ce que** les ouvertures réceptrices (5) sont formées par des sections de tube (9).

8. Réservoir de traitement selon la revendication 7, **caractérisé en ce qu'**entre les sections de tube (9) des nervures (10) sont fournies.

9. Réservoir de traitement selon l'une quelconque des revendications précédentes, **caractérisé en ce que** le chariot (3) transporte une multitude de filtres à bougies.
